# EUROPEAN PATENT SPECIFICATION

(11) **EP 0 892 612 B1**
(45) Date of publication and mention of the grant of the patent: **02.10.2002**
(21) Application number: 97906758.4
(22) Date of filing: 21.02.1997
(51) Int. Cl.: A23N 7/00, A47J 17/00, A23N 7/02

(54) **POTATO PEELING APPARATUS**
KARTOFFELSCHÄLVORRICHTUNG
APPAREIL POUR EPLUCHER LES POMMES DE TERRE

(30) Priority: 08.03.1996 US 613219; 24.10.1996 US 736517
(43) Date of publication of application: 27.01.1999
(73) Proprietor: UTZ Quality Foods, Inc., Hanover, PA 17331 (US)
(72) Inventor: FUHRMAN, Jeffrey, E., Hanover, PA 17331 (US)
(74) Representative: Warren, Anthony Robert
(86) International application number: US9702903
(87) International publication number: WO97032489

(56) References cited:
- FR-A- 2 558 690
- US-A- 877 550

## Description

The invention relates to a drum-type batch peeler for peeling potatoes and other food products of the kind disclosed in FR-A-2 558 690.

Drum-type batch potato peelers typically include a cylindrical drum with an abrasive material mounted on the inner surface of the drum. A rotary floor or plate is provided at the bottom of the drum. A batch of potatoes is placed in the drum, rotated by the floor and thrown up by centrifugal force against the abrasive material. Frictional contact between the potatoes and the material peels the potatoes. After the batch has been peeled for a period of time, the peeled potatoes are discharged for subsequent processing.

Conventional batch peelers use a single abrasive liner for peeling. The liner has a single grade of abrasive, typically a coarse sand-like abrasive, a medium sand-like abrasive or a soft fiber brush. Different grades of abrasive are required in order to peel potatoes having different types of skin. For instance, spring potatoes have delicate skins and are best peeled using a medium abrasive or brush liner. Potatoes with thick and tough skins are best peeled using a coarse abrasive liner.

The liners in conventional batch peelers are secured to the drums during peeling. In order to change over a peeler to a different abrasive, it is necessary to remove the machine from production, open the machine, unbolt the incorrect abrasive liner mounted in the machine, remove the liner and then insert and attach a new liner with the proper abrasive. This is a time-consuming and costly operation, especially when the peeler is used in continuous production of peeled potatoes.

The rotary floor or plate of conventional drum-type batch peelers rotates at a fixed speed during filling of the peeler, peeling and discharge of peeled potatoes from the peeler. The fixed speed is relatively high in order to efficiently peel potatoes. The high speed rotation of the plate is likely to injure the potatoes when batches are fed into the peeler and when peeled potatoes are discharged from the peeler.

Conventional potato peeling systems are not adjustable during operation other than by varying the length of time the potatoes are in the peeler. The inflexibility means that a machine set up to peel a potato with a particular type of skin and surface configuration cannot be easily converted to peel potatoes with different types of skin.

From one aspect of the invention there is provided an article peeling apparatus as defined in claim 1.

From another aspect of the invention, there is provided a method of peeling food articles as defined in claim 10.

The invention may be applied to a potato peeling apparatus using an adjustable drum-type batch peeler. The peeler includes a number of interior bands of different grade abrasive and a drive for raising and lowering the bands in the peeler to position a selected abrasive band immediately above the rotary plate during peeling. The band is selected to meet the peel requirements of the particular potatoes being peeled. The disclosed peeler according to a first embodiment includes an adjustable liner with three abrasive bands, a rough abrasive grit band, a medium or fine abrasive grit band, and a brush band on a single liner. The liner is moved vertically in the drum to position a selected band immediately above the plate for peeling. The disclosed peeler according to a second embodiment includes a plurality of independently movable cylindrical liners with a band of different grade abrasive on the inner surface of each liner. These liners nest inside each other and are moved vertically in the drum to position a liner with a selected band of abrasive immediately above and facing the plate. The other liners may be outside or vertically spaced from the liner with the selected abrasive band. Potatoes may be peeled by positioning two bands above the plate so that the potatoes are thrown up against two bands of different abrasive.

The rotary bottom plate of the peeler is driven by an adjustable speed drive so that the rotary speed of the plate may be slowed during feeding of a batch of potatoes into the peeler and during discharge of a batch of peeled potatoes from the peeler. Slowing the bottom plate reduces injury to the potatoes.

Each batch of unpeeled potatoes fed into the peeler is automatically weighed and is again weighed after peeling in order to determine the percentage of weight loss during peeling. The percentage of weight lost for successive batches is averaged by a computer control system and is then compared to a desired percentage weight loss. Peel parameters, including the ·peel time, the abrasive band or bands used during peeling and the speed of the rotary bottom plate are automatically adjusted in order to attain the desired percentage weight loss for successive batches of peeled potatoes.

The peeling apparatus also includes a television monitoring assembly which automatically determines the amount of unpeeled skin left on peeled potatoes to assure that the potatoes meet minimum visual requirements. If peeling to a desired weight loss leaves too much or too little skin on the potatoes, then the peeling parameters are further adjusted to assure the peeled potatoes meet visual requirements.

The control system of the potato peeling apparatus permits automatic adjustment of the peeling operation to preset standards, despite variation in the quality of potatoes in each peel batch. This feature assures efficient production-line operation with minimum manual intervention and reduced cost. Further, information concerning the peel properties of particular types of potatoes can be developed and stored for retrieval and future use.

Reference will now be made to the accompanying drawings, in which:-
Figure 1 is a side view of a potato peeling apparatus according to a first embodiment;
Figure 2 is a top view of Figure 1;
Figures 3-6 are sectional views taken generally along line 3--3 of Figure 2 showing the peeler of the first embodiment in different positions;
Figure 7 is a top view of the peeler shown in Figure 6;
Figure 8 is an enlarged view of the portion of Figure 7 in line 8--8;
Figure 9 is a sectional view taken generally along line 9--9 of Figure 3;
Figure 10 is a sectional view like Figure 3 showing-a peeling apparatus according to a second embodiment;
Figure 11 is a top view, partially broken away, of Figure 10;
Figures 12-14 are sectional views of the peeler according to the second embodiment similar to Figures;
Figure 15 is a sectional view taken generally through the top of the liners showing upper portions of the liners with vertical arms joined to the liners; and
Figure 16 is a sectional view showing potatoes being peeled in the peeler.

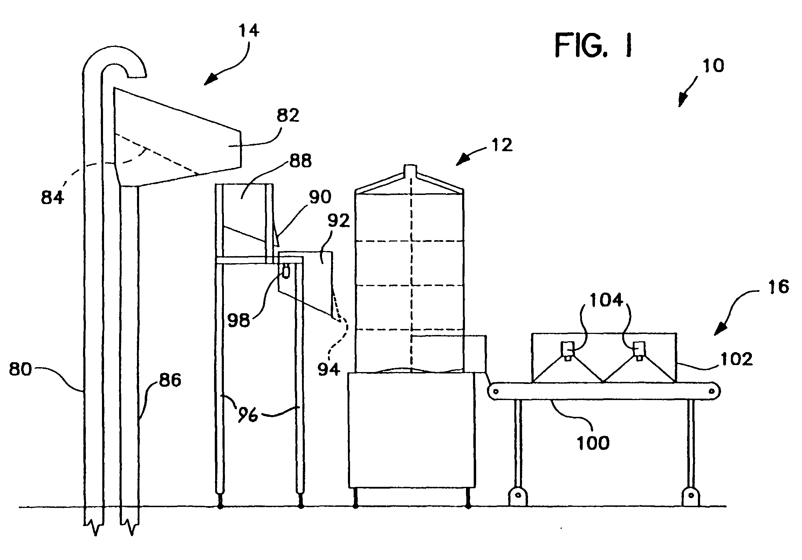

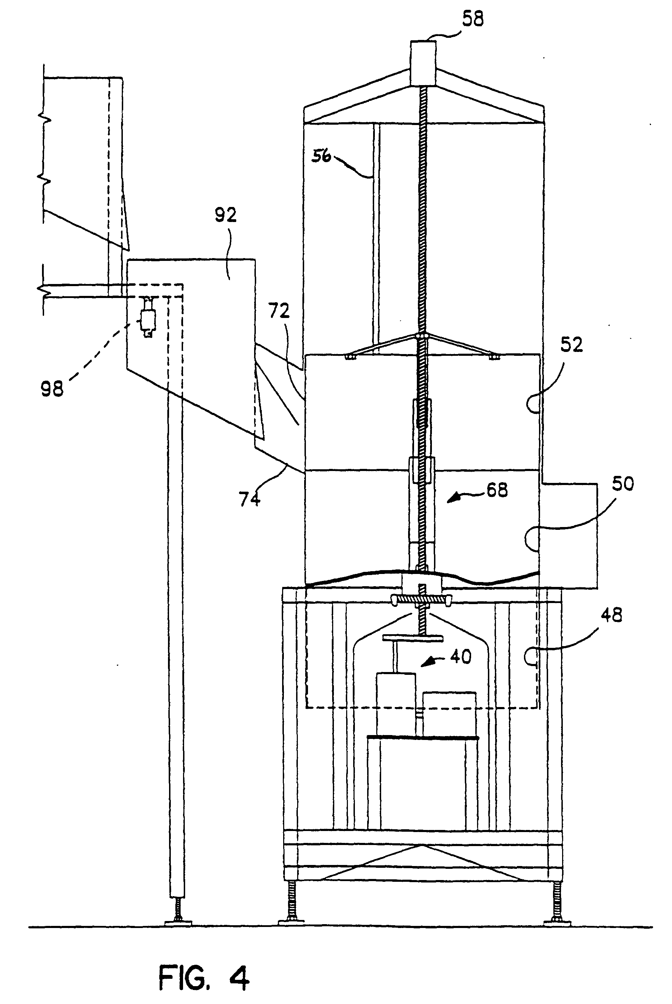

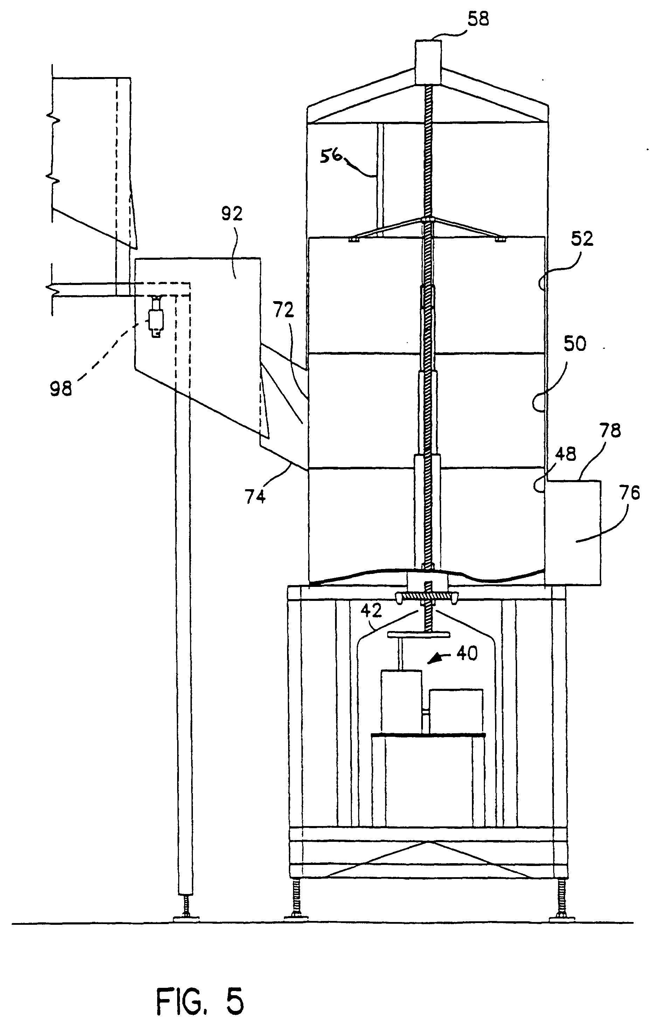

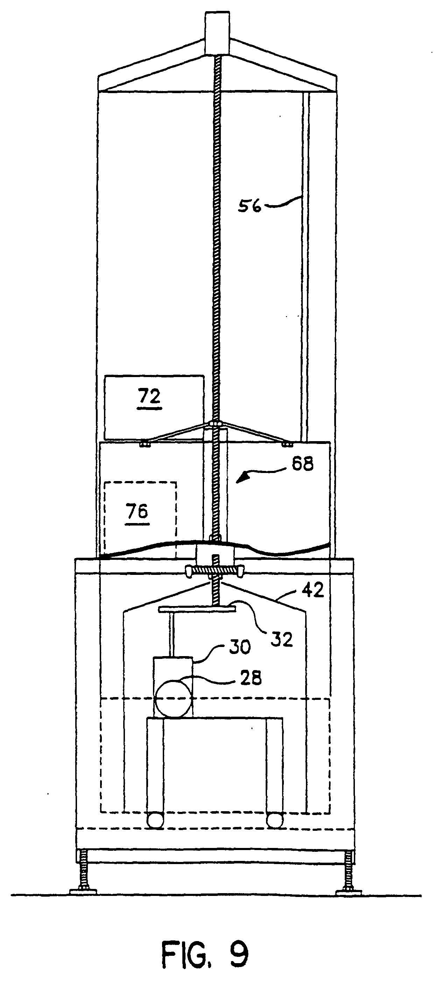

According to a first embodiment of the invention illustrated in Figures 1-9 of the drawings, potato peeling system 10 includes a drum-type batch peeler apparatus 12, an unpeeled potato infeed assembly 14 located upstream from the peeler and a peeled potato discharge assembly 16 located downstream from the peeler.

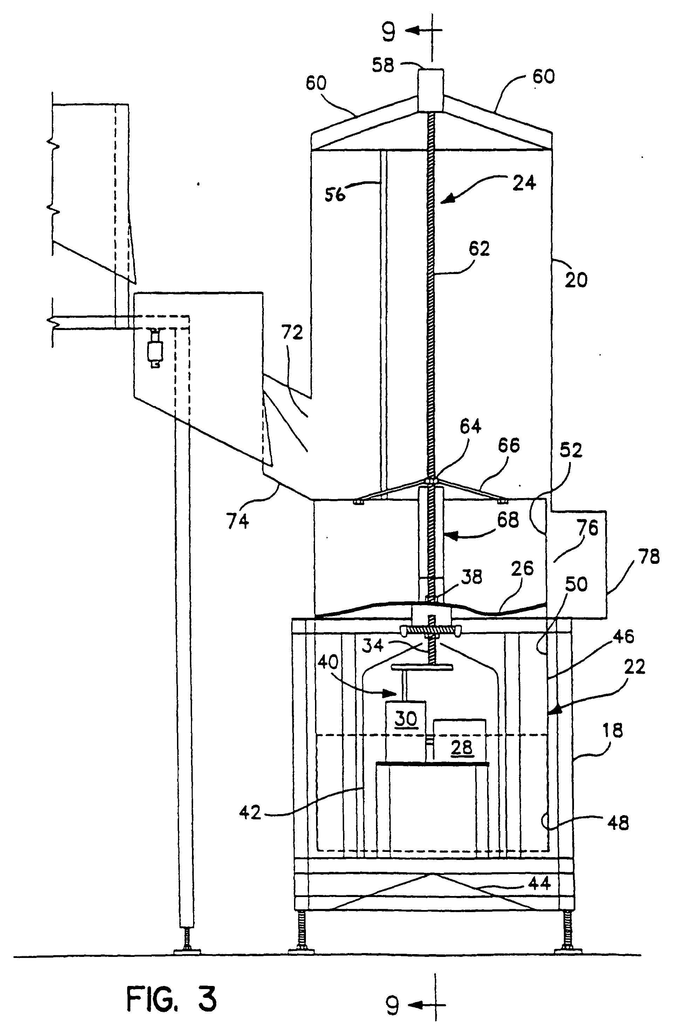

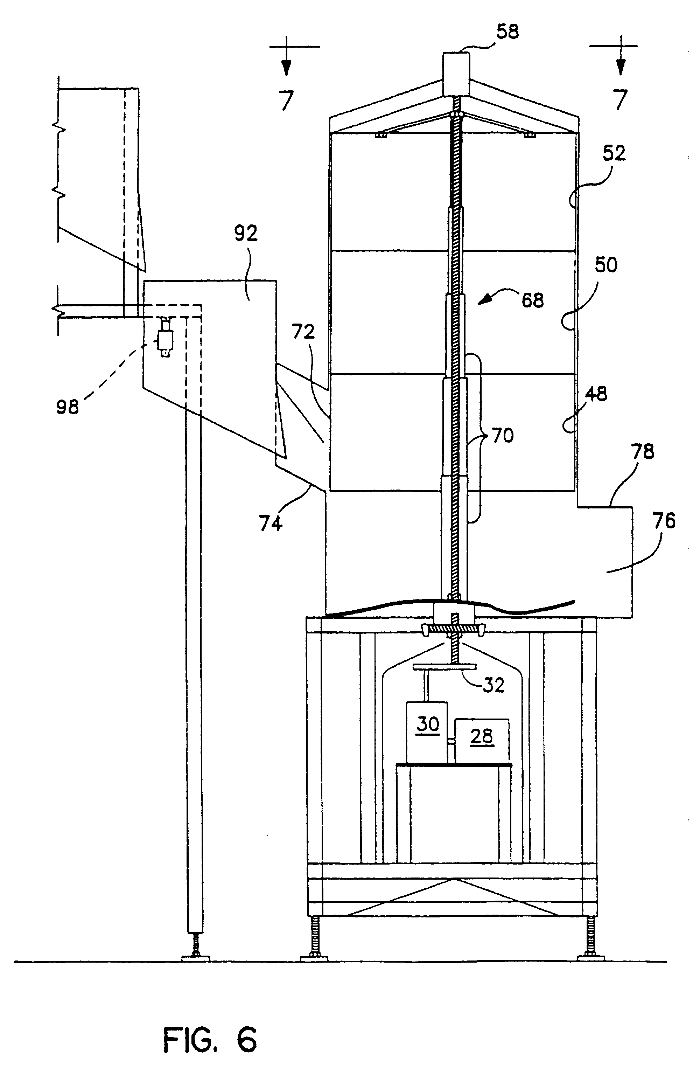

Batch peeler 12 includes a rectangular base 18 with a cylindrical drum 20 mounted on the top of the base and a vertically oriented cylindrical liner 22 fitted within the drum 20. The bottom of the drum is open. The liner 22 has a close sliding fit within the drum and when lowered extends partially into base 18. Liner drive 24 moves the liner vertically between a fully raised position shown in Figure 6 and a fully lowered position shown in Figure 3.

Potato driving rotary plate 26 is located at the bottom of the outer drum and is spaced a short distance inwardly from the drum to provide a circumferential gap between the plate and drum sufficiently wide to permit vertical movement of the liner. The plate includes an upwardly formed elliptical portion which, when rotated, drives or throws potatoes in the peeler against an abrasive band on the interior of the liner to peel the potatoes.

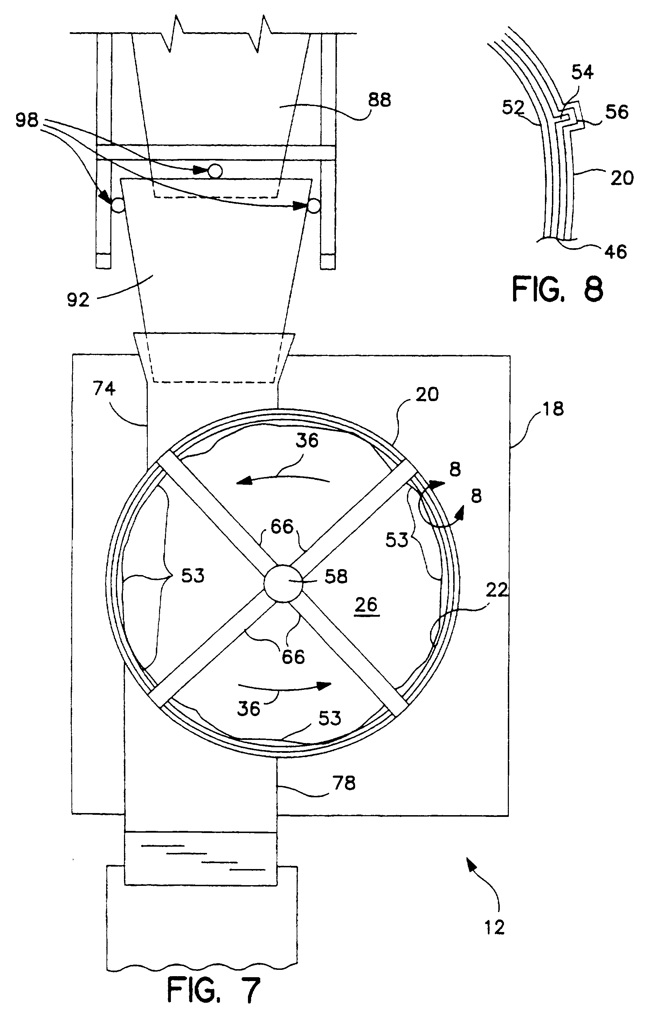

Plate drive 40 is located in base 18 and includes drive motor 28, gear box 30 and drive train 32 connected to a drive shaft 34 supporting the plate. Shaft 34 is mounted on the base through a suitable bearing so that operation of motor 28 rotates plate 26 in the direction of arrows 36 as shown in Figure 7. Bearing socket 38 is mounted on the top of plate 26 above shaft 34.

The plate drive 40 is located in a sheet metal shroud 42 with shaft 34 extending outwardly through a central opening in the shroud. The shroud protects the drive from liquid and peelings falling down from drum 20. The liquid and peelings are collected in a drain pan 44 mounted on the bottom of base 18 and are removed.

Liner 22 includes an outer cylindrical metal tube or body 46 having a sliding fit in drum 20. Three vertically spaced bands of abrasive peeling material are secured on the interior cylindrical surface of tube 46 with a brush band 48 located at the bottom of the tube, a medium abrasive band 50 located at the middle of the tube and a coarse band 52 located at the top of the tube. The lower brush band is formed of short inwardly facing synthetic fibers, which may be nylon fibers, having a length of about 1/8 to 3/16 inches (0.32 to 0.48 cm). The center medium abrasive band comprises a medium abrasive grit adhered to the tube 46. The upper coarse abrasive band 52 comprises a relatively coarse abrasive grit. The brushes and grits attached to liner 22 are each used in conventional single band batch peelers and need not be described further. The bands may be formed of other peeling materials, if desired. For example, the center abrasive band may be a fine abrasive grit. Inwardly facing elliptical projections 52 are spaced around the abrasive bands to tumble potatoes and improve peeling.

As shown in Fig. 8, a number of anti-rotation vertical ribs 54 are secured to the outer surface of tube 46 and slide up and down in vertical slots 56 formed in drum 20. The ribs prevent potatoes thrown up against an abrasive band during peeling from rotating the tube in the drum. Only one rib is shown. If desired, other types of anti-rotation connections between the tube and drum may be used.

The liner drive 24 includes a drive motor 58 mounted on the top of drum 20 above bearing socket 38 by a number of radial support arms 60 extending from the top of the drum to the motor. The output shaft of motor 58 is connected to an elongate threaded positioning shaft 62 having a lower end seated in socket 38 to permit relative rotation between the shaft and plate 26. Drive nut 64 is threadable mounted on shaft 62 and is connected to the top of liner 22 by a number of radial arms 66.

Vertically extendable and contractible drive 24 is connected between the liner tube or body 46 and plate 26. The drive is connected to the body through arms 66 and is connected to the plate through arms 60, drum 20, base 18, and plate drive 40. Actuation of the drive moves the liner vertically relative to the vertically fixed plate. It is contemplated that a drive could move the plate vertically relative to a fixed liner in order to position the plate adjacent to a desired abrasive band for peeling.

A collapsible shaft shroud 68 surrounds the portion of shaft 62 extending between plate 26 and drive nut 64 and includes a number of nested tubular segments 70 (see Fig. 6). The shroud protects the shaft 62 from liquid and peelings generated during operation of the peeler 12 and prevents potatoes from contacting the shaft. The shroud has a maximum height extending from the plate to the top of the drum 20 as shown in Figure 6, and a minimum collapsible height equal to approximately the height of one band, as shown in Figure 3.

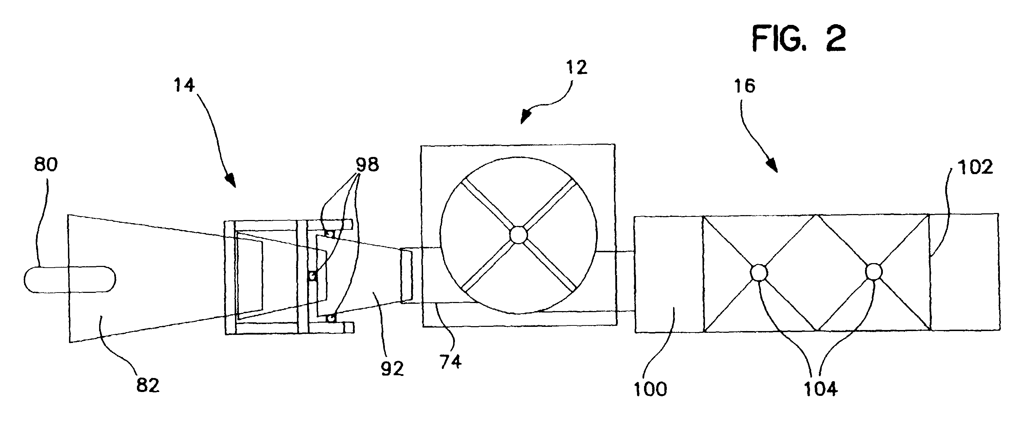

A potato inlet opening 72 is provided in drum 20 a distance above plate 26 equal to the vertical height of the upper band 52. See Figure 3. Potato inlet chute 74 surrounds opening 72 and extends upwardly from the opening. As shown in Figures 2 and 7, chute 74 extends away from one side of the drum so that potatoes discharged through the chute and into the liner are grouped to one side of the central threaded shaft. The chute discharges the potatoes into the peeler in generally the same direction the plate 26 moves below the opening 72, to reduce injury to the potatoes during charging of the peeler.

Potato discharge opening 76 is provided in drum 20 above plate 26 and directly across the drum from opening 72, on the same side of the shaft 62 as opening 72. Potato discharge chute 78 surrounds discharge opening 76 and extends outwardly from one side of the drum to receive potatoes thrown outwardly by rotation of plate 26 when the liner 22 is fully raised as shown in Figure 6. The peeled potatoes are thrown radially outwardly by rotation of plate 26 and are guided into the chute with minimum injury.

Infeed assembly 14 includes a vertical infeed pipe 80 with a rotary auger (not illustrated) in the pipe operable to lift unpeeled potatoes and water to elevated flume 82. The flume is provided with a grate 84 which permits the water to drain away through return pipe 86. Unpeeled potatoes are discharged from the flume into elevated storage hopper 88 having an outlet door 90 located above weigh hopper 92. The weigh hopper includes a discharge door 94 at the lower end of the hopper located in inlet chute 74 of peeler 12. Doors 90 and 94 are selectively opened and closed by door drives (not illustrated).

Both hoppers 88 and 92 are supported on frame 96. Weigh hopper 92 is secured to the frame by a number of load cells 98. Load cells 98 are connected to a control circuit (not illustrated) which determines the weight of a batch of unpeeled potatoes held in the weigh hopper for discharge into the peeler.

The discharge assembly 16 includes a weigh belt conveyor 100 extending downstream from discharge chute 78. Television camera housing 102 is positioned above weigh belt conveyor 100 and supports a pair of television viewing cameras 104. The cameras are spaced along the length of the conveyor and have widths of field extending across the width of the conveyor belt. As peeled potatoes are tumbled along conveyor 100, cameras 110 take instantaneous pictures of the potatoes against a white background. Remaining skin on the potatoes is shown in the pictures as dark areas. The cameras are connected to circuitry which counts the number of pixels in each dark area and then sums the number of dark-area pixels to generate an output proportional to the area of unpeeled skin for each batch of peeled potatoes discharged from peeler 12.

Operation of the potato peeling system 10 is automatically controlled by a computer system responsive to a number of inputs to maximize peeling efficiency in accordance with peel standards for particular types of potatoes. The computer system includes a programmable logic controller (PLC) responsive to inputs including the weight of a batch of unpeeled potatoes delivered to the peeler from weigh hopper 92 as determined by load cells 98, the weight of the peeled batch of potatoes as determined by the weigh belt conveyor 100 and the area of unpeeled skin left on the peeled potatoes in the batch as determined by counting the dark pixels viewed by cameras 104.

The operation of the batch peeler may be controlled by the PLC or manually to vary the rotary speed of bottom plate 26, the duration of the peel for each batch, and the time during the peel the potatoes are peeled against a particular abrasive band.

Typically, the rotational speed of the plate 26 is slowed to approximate the velocity of the potatoes as they are discharged into the peeler in order to reduce impact injury to the potatoes. The rotational speed of plate 26 is also slowed during discharge to reduce impact injury.

The operation of the potato peeling system according to the first embodiment will now be described.

Unpeeled potatoes are delivered to storage hopper 88 and are discharged from the hopper in batches into the weigh hopper 92 by opening door 90. The load cells 98 determine the weight of each batch of unpeeled potatoes prior to discharge into peeler 12.

Prior to discharge of a batch of potatoes into the peeler, the liner drive motor 58 is actuated to fully lower liner 22 to the position of Figure 3 where the top of the liner is located below inlet opening 72. When in this position, the liner does not obstruct discharge of a batch of potatoes from hopper 92 into the peeler. Also, the speed of drive motor 28 is reduced to reduce the rotational speed of plate 26 to approximate the speed of the potatoes as they fall down through chute 74 and opening 72 and onto the plate. In this way, impact injury to the unpeeled potatoes due to the fall is reduced. For instance, for a liner having an interior diameter of about three feet (92.2 cm) where the bottom of the inlet opening 72 is approximately 16 inches (41 cm) above plate 26, the rotational speed of the plate may be slowed to about 52 rpm.

With the liner lowered and plate speed reduced, discharge door 94 is opened to allow the batch of weighed unpeeled potatoes in the storage hopper to fall into the peeler. After the potatoes are delivered into the peeler, motor 58 is actuated to raise the liner 22 to position either band 50 or 48 above plate 26, if the potatoes are to be peeled by the medium or fine abrasive grit or by the brush bands. The motor is not actuated if the potatoes are to be peeled by coarse band 52. With the proper band in place for peeling, motor 28 is accelerated to rotate plate 26 at a peeling speed of from 103 to 125 revolutions per minute for a three foot(92.2 cm) diameter peeler.

High speed rotation of the plate rotates and throws the potatoes outwardly against the band extending upwardly from the plate. The potatoes are not thrown higher than the top of the band. The potatoes are peeled as they move along the abrasive surface and across the inward projections 53. The projections 53 tumble the potatoes on the abrasive to improve peeling. Peeling is continued until a desired quality peel has been achieved. For instance, it may be necessary to peel the potatoes until all or nearly all of the potato peel has been removed. Alternatively, a lighter peel, with a greater amount of skin left on the potato, may be required. This type of peel could be advantageous where it is desirable to remove a minimum percentage by weight of potato during peeling, thereby maximizing the weight of the final food product made from the peeled potato.

With some thin-skinned potatoes, it may be advantageous to initiate the peel using one of the grit bands of abrasive 50 and 52 and then finishing the peel using the less abrasive and gentler brush band 48. This is easily accomplished by actuating motor 58 during peeling to raise the liner in the drum sufficiently so that the brush band is positioned above rotating plate 26. This operation may be performed during peeling without the necessity of slowing plate 26. Obviously, the drive 24 may be used to raise or lower the liner during peeling to facilitate peeling a given batch of potatoes using any or a number of the three bands, as required for a particular peel.

The peeler includes a conventional spray system (not illustrated) which delivers water into the liner during peeling to aid in peeling and discharge of peeled skin from the liner. The water and peelings fall down on to pan 44.

After peeling has been completed, drive 24 is actuated to fully raise the liner 22 in drum 20 and uncover the discharge opening 76. Continued rotation of plate 26, preferably slowed to prevent damage to the potatoes, discharges the batch of peeled potatoes through chute 78 and onto weigh belt conveyor 100. The conveyor moves the peeled potatoes downstream away from the peeler and spreads the potatoes across the conveyor. As the potatoes move along the conveyor, sensors in the conveyor determine the weight the peeled potatoes. The control system compares the weight of the peeled batches with the weight of unpeeled batches when in the weigh hopper to determine the average percentage of weight lost for a number of batches. The system compares the determined average weight lost with the desired loss and then automatically adjusts the length of the peel, or in some cases, the abrasive band or bands used during peeling, in order to increase or decrease weight loss so that the actual weight loss matches the desired weight loss. This adjustment is performed automatically by the control system in accordance with the computer program for the particular peeler.

As the potatoes are fed along the weigh belt conveyor 100, cameras 140 take pictures of the potatoes and determine the percentage of skin remaining on the potatoes. The potatoes tumble as they move along the conveyor. The cameras take pictures of the potatoes in different positions to provide an accurate assessment of the percentage of skin remaining on the potatoes. If the percentage of skin remaining on the potatoes is greater than a visual standard, the control system automatically adjusts the peel parameters to remove more skin until the standard is met.

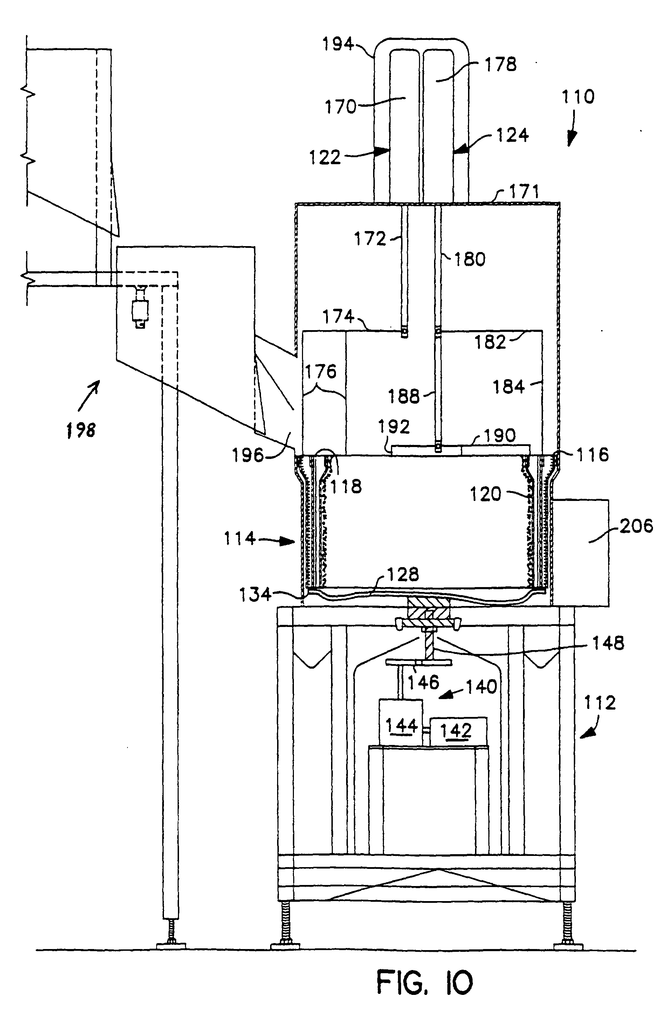

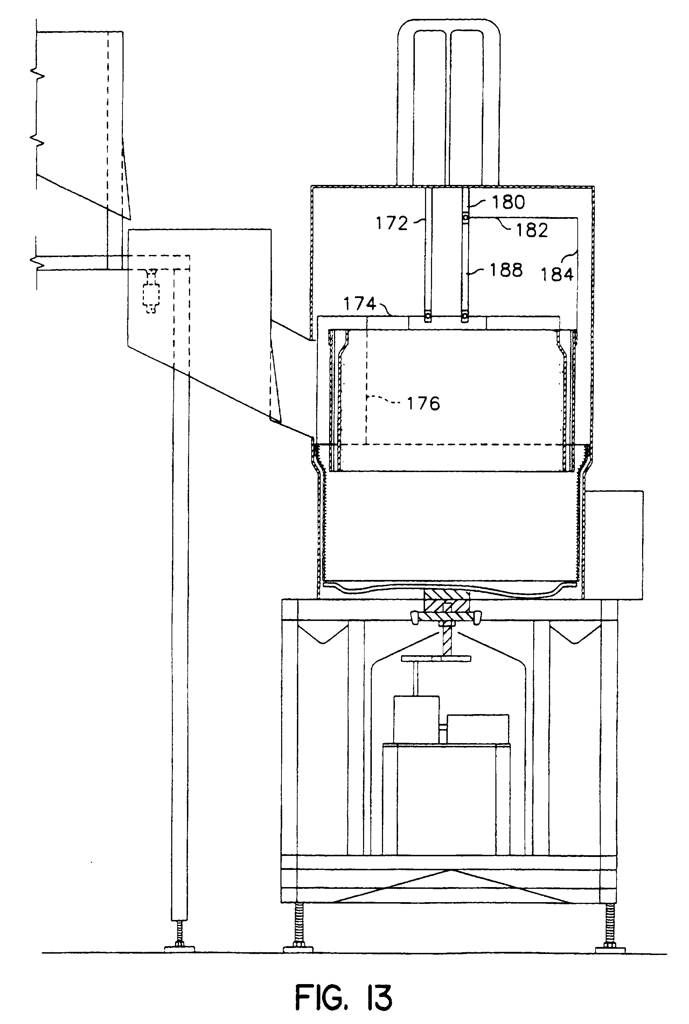

A second embodiment of potato peeling system is illustrated in Figures 10-16 of the drawings. The second peeling system includes potato peeling apparatus 110 having a rectangular base 112, a cylindrical drum 114 mounted on the top of the base 112, and three vertically movable, cylindrical liners 116, 118 and 120 in the drum. The liners are located inside the drum 114 and are individually movable up and down in the drum. Liners 116, 118 and 120 are arranged nested inside each other with outermost liner 116 adjacent the drum, liner 118 between liner 116 and liner 120, and liner 120 inside liner 118. As illustrated, the diameter of liner 116 is greater than the diameter of liner 118 and the diameter of liner 118 is greater than the diameter of liner 120. The bottom of the drum is open.

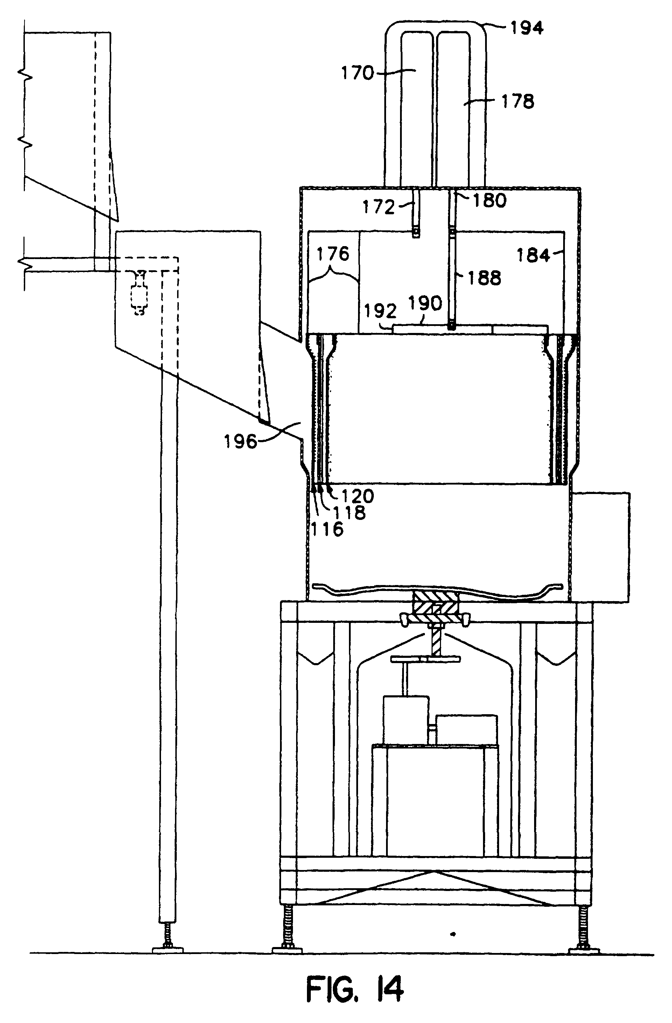

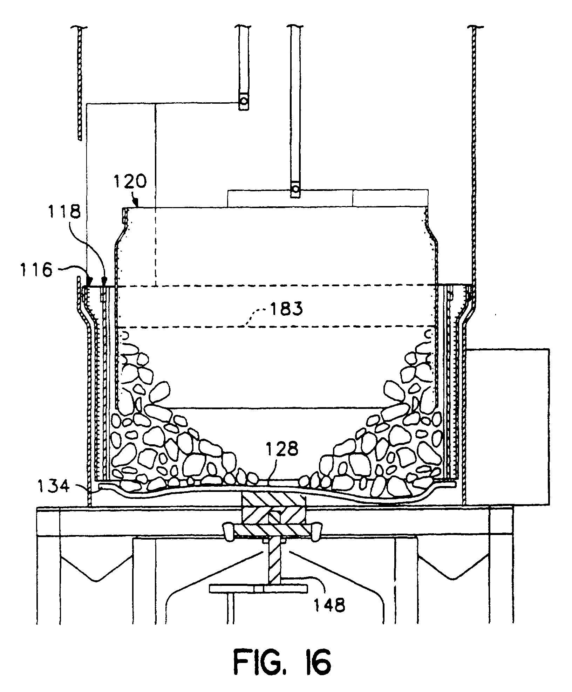

Peeler 110 includes a liner drive with like liner subdrives 122, 124 and 126 mounted on cover 171 of drum 114 and joined to liners 116, 118 and 120, respectively. The liner drives 122, 124 and 126 move the liners vertically between lowered positions in the drum as shown in Figure 10 and raised positions as shown in Figure 14. The liner drives also permit a liner to be positioned in a partially raised position as shown in Figure 16 where the abrasive on the liner 120 is located in the upper portion of the drum and the abrasive on liner 118 is exposed at the bottom of the drum.

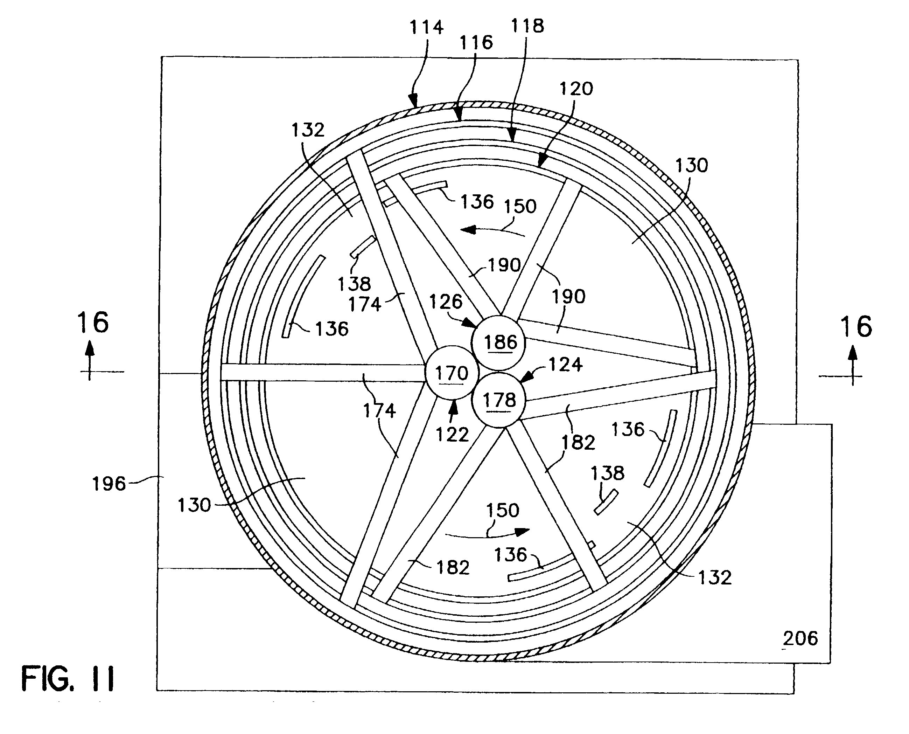

Potato driving rotary plate 128 is located at the bottom of the drum 114 and is spaced a short distance inwardly from the drum to provide a gap between an outer edge of plate 128 and the inner surface of the drum. The top of plate 128 includes a pair of diametrically opposed high regions 130 and a pair of diametrically opposed low regions 132 (see Fig. 11). During rotation of plate 128, the vertical variations in the surface of the plate between adjacent regions aid in tumbling the potatoes to increase the efficiency of the peeling operation.

The outer edge of plate 128 forms a raised lip 134. Plate 128 includes drainage slots 136 and 138 for drainage of the water from the peeler 110. Each low region 132 includes two elongate slots 136 located radially inward of and below the lip 134 and a short slot 138 located between slots 136 at approximately the low point of the low region 132. The slots 138 are located a short distance inwardly from slots 136. The slots permit drainage of water through the plate but do not injure or capture potatoes during peeling.

Plate drive 140 is located in base 112 beneath plate 128 and includes plate drive motor 142, gear box 144 and drive train 146 connected to a drive shaft 148 supporting the plate. Shaft 148 is mounted on the base 112 through a suitable bearing so that operation of motor 142 rotates plate 128 in the direction of arrows 150 as shown in Figure 11.

Plate drive 140 is located in metal shroud 154 with shaft 148 extending outwardly through a central opening in the shroud. The shroud protects the drive from liquid and peelings falling down from drum 114. The liquid and peelings are collected in a drain pan 156 mounted on the bottom of base 112 and are removed.

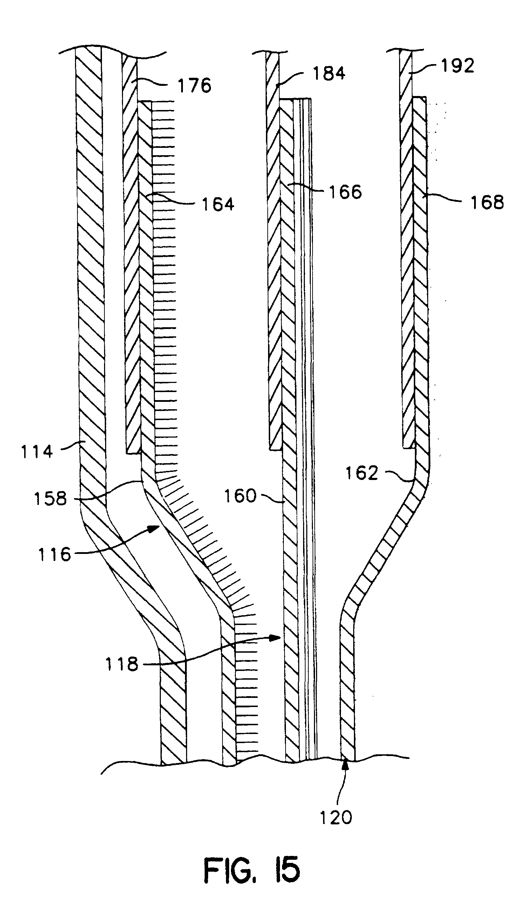

As shown in Fig. 15, liners 116, 118 and 120 each include an outer cylindrical tube or body 158, 160 and 162, respectively. A band of abrasive peeling material is secured on the interior cylindrical surface of each body 158, 160 and 162. The upper portion 164 of body 158 is flared radially outwardly from the circumference of body 158 providing a gap between the upper portion 164 and an upper portion 166 of body 160. The upper portion 168 of body 162 is flared radially inwardly from the circumference of body 162 providing a gap between the upper portion 166 and the upper portion 168. The gaps facilitate attachment of the liners to the liner drives.

The abrasive peeling material secured to outer liner body 158 is formed of short inwardly facing synthetic fibers, which may be nylon fibers, having a length of about 1/8 to 3/16 inches (0.32 to 0.48 cm). The abrasive material secured to middle liner body 160 comprises a medium abrasive grit. The abrasive material secured to inner liner body 162 comprises a relatively course abrasive grit. Other peeling materials may be substituted for the above mentioned materials, if desired. For example, the middle liner body 160 may comprise a fine abrasive grit.

Liner drive 122 for outer liner 116 includes a drive cylinder 170 mounted on drum cover 171, a vertical shaft 172 operably joined to drive cylinder 170 extending downward into drum 114, three radial ribs 174 join to the lower end of shaft 172 and extending outwardly, and three circumferentially spaced vertical arms 176 extending downwardly from the outer ends of ribs 174 to the top 164 of liner 116.

Liner drive 124 for middle liner 118 includes a drive cylinder 178 mounted on drum cover 171, a vertical shaft 180 operably joined to drive cylinder 178 extending down towards drum 114, three radial ribs 182 joined to the lower end of shaft 180 extending outwardly, and three circumferentially spaced vertical arms 184 extending downwardly from the outer ends of ribs 182 to the top 166 of liner 118.

Liner drive 126 for inner liner 120 includes a drive cylinder 186 mounted on drum cover 171, a long vertical shaft 188 operably joined to drive cylinder 186 extending down towards drum 114, three radial ribs 190 joined to the lower end of shaft 188 extending outwardly, and three circumferentially spaced short vertical arms 192 extending downwardly from the outer ends of ribs 190 to the top 168 of liner 120. Shaft 188 is approximately twice as long as shafts 172 and 180, and arms 192 are very short. If desired, the ends of ribs 190 may be directly joined to the top of inner liner 120.

Drive cylinders 170, 178 and 186 are mounted on top of drum 114 within drive housing 194 on cover 171. Vertical arms 176, 184 and 192 are spaced around the top edges of their respective liners. Each set of arms occupies an approximate 120° arc around the drum 114. The three arms of each set of vertical arms 176, 184 and 192 are preferably equally spaced from each other along the 120° arc. The spacing allows each liner drive to operate independently of the other drives and raise and lower the liners independently of the positions of the other liners. Liner drives 122, 124 and 126 are secured against rotation and prevent rotation of the liners during peeling because of impacts with rotating potatoes.

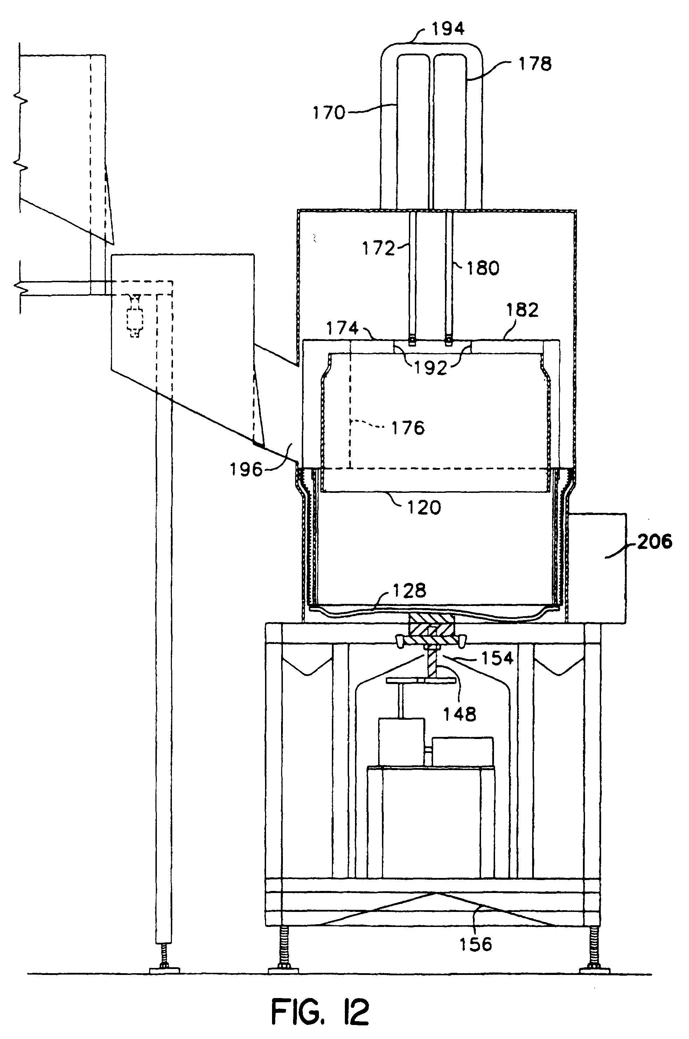

As illustrated in Figure 10, ribs 174 extend over the tops of the inner liner 120 and intermediate liner 118. Likewise, ribs 182 extend over the top of the inner liner 160. The vertical arms 176 and 184 extend downwardly from ribs 174 and 182 a distance equal or somewhat greater than the working height to which potatoes are thrown up during peeling. Compare Figures 12 and 16. This arrangement allows the inner liner 120 to be raised with liners 116 and 118 fully lowered. See Figure 12. The drum has height above the plate 128 approximately three times the working height to accommodate the liners and the drive ribs and arms. The drive cylinder extends up above cover 171 a distance approximately equal to the working height. If desired, different lower drives may be provided to raise and lower the liners and reduce the overall height of the peeler.

Potato intake opening 196 is provided in drum 114 a distance above the liners when lowered. See Figure 10. Potato infeed assembly 198 periodically discharges a batch of potatoes to be peeled through opening 196 and into the bottom of the peeler. The infeed assembly 198 transports unpeeled potatoes and water from a storage area by auger to a flume. In the flume, water is drained prior to discharging the potatoes into a storage hopper. When a new batch of potatoes is ready to be peeled, the potatoes are discharged from the storage hopper to a weigh hopper. The weigh hopper determines the weight of the batch of unpeeled potatoes prior to loading the batch into the peeler through opening 196.

A potato discharge opening 206 is provided in drum 114 above plate 128 and across the drum from opening 196. Potato discharge opening 206 discharges peeled potatoes to a discharge assembly.

The discharge assembly transports peeled potatoes from the peeler to various stations for further processing. The peeled potatoes are deposited on a weigh belt conveyor where the peeled weight of the batch is determined and the area of unpeeled skin left on the potatoes is determined by cameras.

Operation of the potato peeling apparatus 110 is automatically controlled by a computer system like the previously described computer system used in peeling system 10.

The operation of the potato peeling system according to the second embodiment will now be described.

Unpeeled potatoes are delivered to intake opening 196 by the infeed assembly 198. The infeed assembly determines the weight of each batch of unpeeled potatoes prior to feeding them into peeler 110.

Prior to feeding of a batch of potatoes into the peeler, the liner drives 122, 124 and 126 are actuated to fully lower liners 116, 118 and 120 to the positions of Figure 10 where the tops of the liners are located below intake opening 196. When in this position, the liners do not obstruct feeding of a batch of potatoes from the infeed assembly into the peeler. Arms 176 are spaced apart such that they do not interfere with the infeed of unpeeled potatoes. Also, the speed of plate drive motor 142 is reduced to reduce the rotational speed of plate 128 to approximate the speed of the potatoes as they fall down through intake opening 196 and onto the plate. In this way, impact injury to the unpeeled potatoes due to the fall is reduced. For instance, for liners having an interior diameter of about three feet (92.2 cm) where the bottom of the intake opening is approximately 16 inches (42 cm) above the plate, the rotational speed of the plate may be slowed to about 52 rpm.

With the liners lowered and plate speed reduced, the infeed assembly allows the batch of weighed unpeeled potatoes to fall into the peeler. After the potatoes are delivered into the peeler, they may be peeled against the course abrasive inner liner 120. In this case, the speed of plate 128 is increased after the potatoes are fed into the drum. If desired, liner drive 126 may be actuated to raise liner 120 to expose liner 118, so that the potatoes are to be peeled by the fine abrasive grit. If the potatoes are to be peeled by the brush band, both drives 124 and 126 are actuated to raise liners 118 and 120 to expose liner 116. With the proper band exposed for peeling, plate motor 142 is accelerated to rotate plate 128 at a peeling speed of from about 103 to about 125 rpm for a three foot (92.2 cm) diameter peeler.

High speed rotation of the plate rotates and throws the potatoes outwardly against the band extending upwardly from the plate to working height 183 shown in Figure 16. The potatoes are not thrown higher than the top of the band.

As shown in Figure 16, most of the potatoes collect at the bottom of the drum near the plate and some potatoes are thrown further up the liner. The potatoes are more densely pressed against the liner closer to the plate 128 at the bottom of the drum by centrifugal force. The density of potatoes decreases above the plate 128. As the density decreases, so does the centrifugal force pressing the potatoes against the liner for peeling. A decrease in force biasing a potato against an abrasive, decreases peeling efficiency. When a single grade abrasive liner is at the bottom of the drum, potatoes near plate 128 are peeled quicker and more extensively than those further above the plate 128. To more effectively regulate the amount each potato in a batch is peeled, liner 120 can be partially raised. With liner 120 partially raised, the more densely packed potatoes are exposed to the less abrasive material of liner 116 or 118 while the less densely packed potatoes are exposed to the more abrasive material of liner 120 and peeling efficiency along the working height is equalized so that all potatoes are peeled equally.

The potatoes are peeled as they move along the abrasive surface and across the surface of plate 128. The surface of plate 128 alternates between high regions 130 and low regions 132. As the plate rotates, the contours of the plate tumble the potatoes to improve peeling. Peeling is continued until a desired quality peel has been achieved. For instance, it may be necessary to peel the potatoes until all or nearly all of the potato peel has been removed. Alternatively, a lighter peel, with a greater amount of skin left on the potato, may be required. This type of peel could be advantageous where it is desirable to remove a minimum percentage by weight of potato during peeling, thereby maximizing the weight of the final food product made from the peeled potato.

With some thin-skinned potatoes, it may be advantageous to initiate the peel using the abrasive of one of liners 118 or 120 and then finishing the peel using the less abrasive and gentler brush of liner 116. This is easily accomplished by actuating liner drives 124 and 126 during peeling to raise liner 118 or 120 above drum 114 so that the brush abrasive of liner 116 is exposed to rotating plate 128. This operation may be performed during peeling without the necessity of slowing plate 128.. Obviously, the drives 124 and 126 may be used to raise liners 118 and 120 during peeling to facilitate peeling a given batch of potatoes using any or a number of the three abrasive materials, as required for a particular peel.

The peeler includes a conventional spray system (not illustrated) as previously described. The water and peelings fall down into base 112 through the gap between plate 128 and the inner surface of drum 114. Water is also drained through slots 136 and 138.

After peeling has been completed, drives 122, 124 and 126 are actuated to fully raise the liners 116, 118 and 120 and uncover the discharge opening 206. Continued rotation of plate 128, preferably slowed to prevent damage to the potatoes, discharges the batch of peeled potatoes through opening 206 and onto the discharge assembly. The discharge assembly moves the peeled potatoes away from the peeler. As the potatoes move away from the peeler 110, sensors in the discharge assembly determine the weight of the peeled potatoes. The control system compares the weight of the peeled batches with the weight of unpeeled batches to determine the average percentage of weight lost for a number of batches. The system compares the determined average weight lost with the desired loss and then automatically adjusts the length of the peel, or in some cases, the abrasive material exposed during peeling, in order to increase or decrease weight loss so that the actual weight loss matches the desired weight loss. This adjustment is performed automatically by the control system in accordance with the computer program for the particular peeler.

The two systems and peelers have been described in connection with peeling potatoes. These units are particularly useful in peeling potatoes, but may be used advantageously to peel other food products, including fruits and vegetables.

## Claims

1. An article peeling apparatus (12; 110) comprising a vertical drum (20; 114); a rotary plate (26; 128) at the bottom of the drum; a plate drive (40; 140) connected to the plate to rotate the plate within the drum; an inlet opening (72; 196) in the drum above the plate; and a discharge opening (76; 206) in the drum above the plate; **characterised by**: a plurality of different grade cylindrical abrasive bands (48, 50, 52; 158, 160, 162) located within the drum and extending around the interior of the drum; and a vertical drive (24; 122, 124, 126), said drive being joined to each abrasive band to move each band up and down in the drum in a vertical direction to selectively position at least one band in a peeling position above and facing the plate for peeling of articles when displaced by the plate.

2. An article peeling apparatus as claimed in claim 1, including a plurality of vertically movable liners (116, 118, 120) in the drum (114), each abrasive band (158, 160, 162) being mounted on one of said liners.

3. An article peeling apparatus as claimed in claim 2, wherein said liners are cylindrical and have different diameters.

4. An article peeling apparatus as claimed in claim 3, wherein the largest diameter liner (116) has a least abrasive band (158) on an inner surface and the smallest diameter liner (120) has a most abrasive band (162) on an inner surface.

5. An article peeling apparatus as claimed in any preceding claim, wherein said drive includes a separate vertically movable drive member (122, 124, 126) for each abrasive band.

6. An article peeling apparatus as claimed in claim 1, including a single liner (22), said abrasive bands (48, 50, 52) being mounted on the liner and said drive (24) engaging the liner.

7. An article peeling apparatus as claimed in any preceding claim, including three abrasive bands (48, 50, 52; 158, 160, 162).

8. An article peeling apparatus as claimed in any preceding claim, including a brush abrasive band (48; 158), a course grit abrasive band (52; 162) and a medium or fine grit abrasive band (50; 160).

9. An article peeling apparatus as claimed in any preceding claim, wherein said drive (24; 122, 124, 126) moves each band vertically up above the peeling position.

10. A method of peeling food articles using a batch peeler having a vertical member (20; 114) extending around a rotary plate (26; 128), an article support surface on the top of the plate and a plurality of cylindrical abrasive bands (48, 50, 52; 158, 160, 162) of different grade abrasive located within the member and each extending around the interior of the member, comprising the steps of:
A) loading food articles to be peeled into the member and onto the support surface of the plate;
B) rotating the plate to propel the articles on the support surface outwardly from the plate;
C) positioning a first abrasive band with the abrasive facing the plate, extending a distance upwardly above the plate and located in the path of articles propelled by the plate while positioning each other abrasive band out of the path of articles propelled by the plate, or at least partially out of said path, and then peeling articles propelled by the plate against at least the first abrasive band;
D) positioning a second abrasive band with the abrasive facing the plate extending a distance upwardly above the plate and located in the path of articles propelled by the plate while positioning each other abrasive band out of the path of articles propelled by the plate, or at least partially out of said path, and then peeling articles propelled by the plate against at least the second abrasive band; and
E) discharging peeled articles from the drum.

## Patentansprüche

1. Eine Produkt-Schäl-Vorrichtung (12; 110), umfassend eine vertikale Trommel (20; 114); eine rotierende Platte (26; 128) am Boden der Trommel; einen Antrieb (40; 140) für die Platte, verbunden mit der Platte, um die Platte in der Trommel zu drehen; eine Einlassöffnung (72; 196) in die Trommel oberhalb der Platte; und eine Auslassöffnung (76; 206) in der Trommel oberhalb der Platte; **gekennzeichnet durch**:
eine Vielzahl von unterschiedlichen Stufen zylindrischer, abrassiver Bänder (48; 50; 52; 158, 160, 162), angeordnet innerhalb der Trommel und sich erstreckend entlang des Inneren der Trommel; und ein vertikaler Antrieb (24; 122, 124, 126), wobei besagter Antrieb verbunden ist mit jedem abrassiven Band, um jedes Band aufwärts und abwärts in der Trommel in vertikaler Richtung zu bewegen, um wenigstens ein Band selektiv in einer Schälposition zu positionieren oberhalb und der Platte zugewandt für den Schälvorgang für die Produkte, wenn diese von der Platte verschoben werden.

2. Eine Produkt-Schäl-Vorrichtung, wie beansprucht in Anspruch 1, einschließend eine Vielzahl von vertikal beweglichen Trägern (116; 118, 120) in der Trommel (114), wobei jedes abrassive Band (158, 160, 162) auf einer Seite des Trägers montiert ist.

3. Eine Produkt-Schäl-Vorrichtung, wie beansprucht in Anspruch 2, wobei besagte Träger zylindrisch sind und unterschiedliche Durchmesser aufweisen.

4. Eine Produkt-Schäl-Vorrichtung, wie beansprucht in Anspruch 3, wobei der Träger (116) mit dem größten Durchmesser das Band mit der geringsten abrassiven Wirkung (158) an einer inneren Oberfläche aufweist und der Träger mit dem kleinsten Durchmesser (120) das am stärksten abrassive Band (162) an einer inneren Oberfläche aufweist.

5. Eine Produkt-Schäl-Vorrichtung, wie beansprucht in einem der vorangehenden Ansprüche, wobei besagte Antriebe einschließen, ein separates, vertikal bewegliches Teil eines Antriebs (122, 124, 126) für jedes abrassive Band.

6. Eine Produkt-Schäl-Vorrichtung, wie beansprucht in Anspruch 1, einschließend einen einzelnen Träger (22), besagte abrassive Bänder (48, 50, 52), welche an dem Träger montiert sind, und besagter Antrieb (24) der den Träger antreibt.

7. Eine Produkt-Schäl-Vorrichtung, wie beansprucht in einem der vorangehenden Ansprüche, einschließend drei abrassive Bänder (48, 50, 52; 158, 160, 162).

8. Eine Produkt-Schäl-Vorrichtung, wie beansprucht in einem der vorangehenden Ansprüche, einschließend ein abrassives Bürstenband (48; 158), ein grobes, sandhaltiges abrassives Band (52; 162) und ein mittleres oder feines, sandhaltiges, abrassives Band (50; 160).

9. Eine Produkt-Schäl-Vorrichtung, wie beansprucht in einem der vorangehenden Ansprüche, wobei besagter Antrieb (24; 122,124,126) jedes Band vertikal aufwärts bewegt, über die Schälposition.

10. Ein Verfahren zum Schälen von Lebensmittelprodukten, verwendend einen Stapel von Schälern, welche ein vertikales Teil (20; 114) aufweist, welches sich um eine drehbare Platte (26; 128) herum erstreckt, eine das Produkt tragende Oberfläche an der Oberseite der Platte, und eine Vielzahl von zylindrischen abrassiven Bändern (48, 50, 52; 158, 160, 162) mit unterschiedlich abrassiven Stufen, angeordnet in den Teilen und jedes sich erstreckend im Innern dieser Teile herum, einschließend die Schritte:
A) Beladen der Lebensmittel-Produkte, welche geschält werden sollen, in das Teil hinein und auf die tragende Oberfläche der Platte;
B) Drehen der Platte, um die Produkte auf der tragenden Oberfläche auswärts hin von der Platte zu treiben;
C) Positionieren eines ersten, abrassiven Bandes, wobei die abrassive Seite der Platte zugewandt ist, sich eine Distanz aufwärts erstreckend, oberhalb der Platte und angeordnet in dem Pfad der Produkte, welche durch die Platte nach außen getrieben werden, während sie sich gegeneinander gegen das abrassive Band positionieren, ausserhalb des Pfades der Produkte, welche durch die Platte nach außen getrieben werden, oder wenigstens partiell außerhalb von besagtem Pfad, und dann Schälen der Produkte, welche durch die Platte gegen wenigstens das erste abrassive Band getrieben werden;
D) Positionieren eines zweiten, abrassiven Bandes, wobei die abrassive Seite der Platte zugewandt ist, sich eine Distanz aufwärts erstreckend, oberhalb der Platte und angeordnet in dem Pfad der Produkte, welche durch die Platte nach außen getrieben werden, während sie sich gegeneinander gegen das abrassive Band positionieren, ausserhalb des Pfades der Produkte, welche durch die Platte nach außen getrieben werden, oder wenigstens partiell außerhalb von besagtem Pfad, und dann Schälen der Produkte, welche durch die Platte gegen wenigstens das zweite abrassive Band getrieben werden; und
E) Ablassen der geschälten Artikel aus der Trommel.

## Revendications

1. Appareil (12 ; 110) pour éplucher des articles comprenant un tambour vertical (20; 114), une plaque rotative (26; 128) au fond du tambour, un entraînement de plaque (40 ; 140) connecté à la plaque pour faire tourner la plaque à l'intérieur du tambour, une ouverture d'entrée (72; 196) dans le tambour au-dessus de la plaque, et une ouverture de décharge (76 ; 206) dans le tambour au-dessus de la plaque, **caractérisé par** une pluralité de bandes abrasives cylindriques de grains différents (48, 50, 52 ; 158, 160, 162) situées à l'intérieur du tambour et s'étendant autour de l'intérieur du tambour, et un entraînement vertical (24; 122, 124, 126), ledit entraînement étant relié à chaque bande abrasive pour déplacer chaque bande vers le haut et vers le bas dans le tambour dans une direction verticale pour positionner sélectivement au moins une bande dans une position d'épluchage au-dessus et en faisant face à la plaque pour éplucher les articles lorsqu'ils sont déplacés par la plaque.

2. Appareil pour éplucher des articles selon la revendication 1, comprenant plusieurs chemises déplaçables verticalement (116, 118, 120) dans le tambour (114), chaque bande abrasive (158, 160, 162) étant montée sur une desdites chemises.

3. Appareil pour éplucher des articles selon la revendication 2, dans lequel lesdites chemises sont cylindriques et ont des diamètres différents.

4. Appareil pour éplucher des articles selon la revendication 3, dans lequel la chemise de plus grand diamètre (116) a la bande la moins abrasive (158) sur une surface interne et la chemise de plus petit diamètre (120) a la bande la plus abrasive (162) sur une surface interne.

5. Appareil pour éplucher des articles selon l'une quelconque des revendications précédentes, dans lequel ledit entraînement comprend un élément d'entraînement séparé déplaçable verticalement (122, 124, 126) pour chaque bande abrasive.

6. Appareil pour éplucher des articles selon la revendication 1, comprenant une seule chemise (22), lesdites bandes abrasives (48, 50, 52) étant montées sur la chemise et ledit entraînement (24) venant en prise avec la chemise.

7. Appareil pour éplucher des articles selon l'une quelconque des revendications précédentes, comprenant trois bandes abrasives (48, 50, 52; 158, 160, 162).

8. Appareil pour éplucher des articles selon l'une quelconque des revendications précédentes, comprenant une bande abrasive à brosse (48 ; 158), une bande abrasive à gros grain (52 ; 162) et une bande abrasive à grain moyen ou fin (50; 160).

9. Appareil pour éplucher des articles selon l'une quelconque des revendications précédentes, dans lequel ledit entraînement (24 ; 122, 124, 126) déplace chaque bande verticalement jusqu'au dessus de la position d'épluchage.

10. Procédé pour éplucher des articles alimentaires utilisant un éplucheur par lots ayant un élément vertical (20; 114) s'étendant autour d'une plaque rotative (26 ; 128), une surface de support d'articles sur le dessus de la plaque et plusieurs bandes abrasives cylindriques (48, 50, 52 ; 158, 160, 162) de degrés d'abrasion différents situées à l'intérieur de l'élément et s'étendant chacune autour de l'intérieur de l'élément, le procédé comprenant les étapes de :
A) charger les articles alimentaires à éplucher dans l'élément et sur la surface de support de la plaque ;
B) faire tourner la plaque pour propulser les articles sur la surface de support vers l'extérieur de la plaque ;
C) positionner une première bande abrasive avec un abrasif faisant face à la plaque, et s'étendant à une distance vers le haut au-dessus de la plaque et située dans le chemin des articles propulsés par la plaque tout en positionnant chaque autre bande abrasive hors du chemin des articles propulsés par la plaque, ou au moins partiellement hors dudit chemin, et ensuite éplucher les articles propulsés par la plaque contre au moins la première bande abrasive ;
D) positionner une seconde bande abrasive avec l'abrasif faisant face à la plaque et s'étendant à une distance vers le haut au-dessus de la plaque et située dans le chemin des articles propulsés par la plaque tout en positionnant chaque autre bande abrasive hors du chemin des articles propulsés par la plaque, ou au moins partiellement hors dudit chemin, et ensuite éplucher les articles propulsés par la plaque contre au moins la seconde bande abrasive ; et
E) décharger les articles épluchés du tambour.
